# EUROPÄISCHE PATENTANMELDUNG

(11) **EP 3 009 312 A1**
(43) Veröffentlichungstag der Anmeldung: **20.04.2016**
(21) Anmeldenummer: 15187900.4
(22) Anmeldetag: 01.10.2015
(51) Int. Cl.: B60T 7/20, B60T 8/17, B60T 8/32

(54) **VERFAHREN ZUR ANSTEUERUNG EINES BREMSSYSTEMS**

(30) Priorität: 13.10.2014 DE 102014220686
(71) Anmelder: Deere & Company, Moline, IL 61265 (US)
(72) Erfinder: Schott, Florian, 36325 Feldatal (DE); Flörchinger, Thomas, 68165 Mannheim (DE); Müller, David, 76297 Stutensee (DE)
(74) Vertreter: Dehnhardt, Florian Christopher

(57) **Zusammenfassung**

Die Erfindung betrifft ein Verfahren zur Ansteuerung eines Bremssystems in einem Zugfahrzeug-Anhänger-Gespann, wobei das Zugfahrzeug eine erste Betriebsbremseinrichtung und der Anhänger eine zweite über das Zugfahrzeug ansteuerbare Betriebsbremseinrichtung umfasst.

## Beschreibung

Die Erfindung betrifft ein Verfahren zur Ansteuerung eines Bremssystems in einem Zugfahrzeug-Anhänger-Gespann, wobei das Zugfahrzeug eine erste Betriebsbremseinrichtung und der Anhänger zumindest eine Fahrachse umfasst, über die durch Ansteuerung über das Zugfahrzeug ein Bremsmoment auf eine befahrene Bodenoberfläche übertragen werden kann.

Regelmäßig ist es im alltäglichen Betrieb eines als Zugfahrzeug dienenden Traktors erforderlich den Traktor entsprechend seinem Einsatzzweck mit Gewichten zu Ballastieren oder ihn beispielsweise mit einem Frontlader zu versehen. Ist ein Frontlader angebaut, kann dieser einerseits mit Frontgeräten verschiedener Größe bestückt sein, andererseits kann ein Frontgerät auch demontiert sein. Jedenfalls führt diese Flexibilität in der Konfiguration eines Traktors dazu, dass die Masse des Traktors in fahrfertigem Zustand erheblich schwanken kann. Demgegenüber ist die Betriebsbremseinrichtung des Traktors nicht lastadaptiv ausgelegt, das heißt es erfolgt keine Anpassung der aufgebrachten Bremsleistung der Betriebsbremseinrichtung bei gegebener Betätigungskraft, welche durch die Bedienperson des Traktors aufzubringen ist. Dies führt dazu, dass die erzielbare Bremsverzögerung des Traktors bei Betätigung der Betriebsbremseinrichtung von der Masse des Traktors in fahrfertigem Zustand abhängig ist, so dass die erzielbare Bremsverzögerung bei voll ballastiertem Traktor spürbar geringer ist als bei unballastiertem Traktor.

Wird ein Traktor nun als Zugfahrzeug in einem Zugfahrzeug-Anhänger-Gespann eingesetzt, gilt für den Traktor das zuvor gesagte gleichermaßen. Allerdings kommt bei dem Betrieb des Gespanns hinzu, dass der Anhänger über eine zweite Betriebsbremseinrichtung verfügt, die regelmäßig pneumatisch ausgeführt ist, deren Aktuierung jedenfalls über das Zugfahrzeug, das heißt den Traktor, erfolgt. Diese Aktuierung ist unmittelbar abhängig von der Betätigung durch die Bedienperson der ersten Betriebsbremseinrichtung des Traktors. Insbesondere ist die Aktuierung der zweiten Betriebsbremseinrichtung des Anhängers abhängig von dem erzeugten Bremsdruck bei einer bestimmten Betätigungsstellung beispielsweise eines Bremspedals der ersten Betriebsbremseinrichtung des Traktors. Wenn nun also in dem Gespann der Traktor unballastiert aber der Anhänger beladen ist, ist bei einer gegebenen Betätigungsstellung der ersten Betriebsbremseinrichtung des Traktors die erzielte Bremsverzögerung des Traktors höher als die erzielte Bremsverzögerung des Anhängers, erzeugt durch dessen zweite Betriebsbremseinrichtung. In diesem Fall kommt es zu einem Aufschieben des Anhängers auf den Traktor, da der Traktor und der Anhänger über die Anhängerkupplung miteinander verbunden sind. Ein derartiger Fahrzustand kann der Fahrstabilität des Gespanns abträglich sein. Aber auch die umgekehrte Fall, nämlich dass in dem Gespann der Traktor ballastiert aber der Anhänger unbeladen ist, ist zumindest aus Komfortgründen nicht wünschenswert, wobei auch hier die Fahrstabilität eingeschränkt sein kann.

Ausgehend hiervon besteht die Aufgabe der vorliegenden Erfindung darin ein Verfahren bereitzustellen, das in den oben beschriebenen Fahrsituationen eine erhöhte Fahrstabilität ermöglicht.

Die Aufgabe wird gelöst durch ein Verfahren zur Ansteuerung eines Bremssystems in einem Zugfahrzeug-Anhänger-Gespann, wobei das Zugfahrzeug eine erste Betriebsbremseinrichtung und der Anhänger zumindest eine Fahrachse umfasst, über die durch Ansteuerung über das Zugfahrzeug ein Bremsmoment auf eine befahrene Bodenoberfläche übertragen werden kann, wobei ein Sollwert aₛₒₗₗ einer eine Bremsverzögerung charakterisierende Verzögerungsgröße des Zugfahrzeugs ohne Anhänger bei Betätigung der ersten Betriebsbremseinrichtung als Vorgabegröße erfasst und hinterlegt wird und ein Istwert aᵢₛₜ der Verzögerungsgröße des Zugfahrzeugs mit Anhänger bei Betätigung der ersten Betriebsbremseinrichtung und Ansteuerung der Fahrachse erfasst wird und durch Anpassen der Betätigung der Fahrachse dem Sollwert aₛₒₗₗ angeglichen wird.

Durch das erfindungsgemäße Verfahren wird eine Regelung der Bremsverzögerung des Anhängers in Abhängigkeit der Bremsverzögerung des Zugfahrzeug-Anhänger-Gespanns bereitgestellt. Durch die bereitgestellte Regelung wird das gleiche Verzögerungsverhalten bei einer Bremsung des Traktors ohne Anhänger und des Traktors mit Anhänger erreicht. Somit lassen sich sowohl Schwankungen in der Masse des Traktors in fahrfertigem Zustand als auch unterschiedliche Bremsverhalten verschiedener Anhänger ausgleichen, so dass das Gespann immer mit der Bremsverzögerung bremst, mit der auch der Traktor ohne Anhänger bremst.

Bevorzugt wird in Abhängigkeit des Sollwertes aₛₒₗₗ der Verzögerungsgröße eine ein Bremsmoment repräsentierende Ansteuergröße M_{Anh}, p_{Anh} der Fahrachse anhand einer hinterlegten ersten Kennlinie ermittelt und angesteuert. Hierdurch ist gewährleistet, dass für verschiedene Anhänger eine jeweilige Kennlinie hinterlegt beziehungsweise für eine Ansteuerung der Fahrachse des Anhängers herangezogen werden kann.

Bevorzugt wird die Fahrachse mit einer korrigierten Ansteuergröße Mₖₒᵣᵣ, pₖₒᵣᵣ angesteuert, wobei ein Proportional-Integral-Regler die korrigierte Ansteuergröße Mₖₒᵣᵣ, pₖₒᵣᵣ aus einem Beschleunigungsdifferenzwert a_{delta} zwischen dem Istwert aᵢₛₜ und dem Sollwert aₛₒₗₗ der Verzögerungsgröße berechnet. Indem die korrigierte Ansteuergröße Mₖₒᵣᵣ, pₖₒᵣᵣ unmittelbar von dem Beschleunigungsdifferenzwert a_{delta} abhängt, erfolgt eine Ansteuerung der Fahrachse in direkter Abhängigkeit zu dem Fahrzustand des Gespanns beziehungsweise einer Änderung des Fahrzustandes.

Bevorzugt wird die erste Kennlinie in Richtung einer höheren oder niedrigeren Bremsdrucks p_{Anh} der zweiten Betriebsbremseinrichtung angepasst, wenn eine korrigierte Ansteuergröße Mₖₒᵣᵣ, pₖₒᵣᵣ von der in der ersten Kennlinie hinterlegten Ansteuergröße M_{Anh}, p_{Anh} abweicht. Hierdurch kann eine für die Bedienperson relevante Komfortfunktion bereitgestellt werden, indem nämlich bezogen auf das Bremsverhalten eine Adaptivität besteht.

Bevorzugt ist der Sollwert aₛₒₗₗ der Verzögerungsgröße in Abhängigkeit des Bremsdrucks p_{Tr} und einer Betätigungsstellung der ersten Betriebsbremseinrichtung in einer zweiten Kennlinie hinterlegt. Hierdurch ist es möglich ausgehend von der zweiten Kennlinie und bei Kenntnis einer aktuell gemessenen Verzögerungsgröße eine Masseerkennung des Traktors alleine durchzuführen.

Bevorzugt wird die zweite Kennlinie in Richtung eines höheren oder niedrigeren Sollwerts aₛₒₗₗ der Verzögerungsgröße angepasst, wenn ein sensorisch erfasster Wert aₛₑₙₛ der Verzögerungsgröße des Zugfahrzeugs ohne Anhänger von dem in der zweiten Kennlinie hinterlegten Sollwerts aₛₒₗₗ der Verzögerungsgröße abweicht. Hierdurch wird nach erfolgter Masseerkennung die aktuell gültige Verzögerungsgröße hinterlegt.

Bevorzugt werden die Werte aₛₒₗₗ, aᵢₛₜ, aₛₑₙₛ der Verzögerungsgröße über einen Beschleunigungssensor erfasst werden. Die Erfassung über einen Beschleunigungssensor ist einfach darzustellen und liefert hinreichend genaue Werte.

Bevorzugt umfasst die Fahrachse des Anhängers eine über das Zugfahrzeug ansteuerbare zweite Betriebsbremseinrichtung, um ein Bremsmoment auf eine Bodenoberfläche zu übertragen. Hierdurch kann die Fahrfunktion getrennt von der Bremsfunktion dargestellt werden.

Bevorzugt ist die zweite Betriebsbremseinrichtung pneumatisch oder hydraulisch betätigt. Derartige Betriebsbremssysteme sind einfach verfügbar und leicht zu adaptieren.

In einer alternativen Ausgestaltung handelt es sich bei der Fahrachse des Anhängers bevorzugt um eine elektrisch angetriebene oder eine hydraulisch angetriebene Triebachse. Hierdurch kann in einfacher Weise ein Bremsmoment auf die Fahrachse aufgebracht werden, indem ein entgegensetzt gerichtetes Antriebsmoment über den elektrischen Antrieb oder den hydraulischen Antrieb aufgebracht wird.

Die Erfindung wird nachfolgend anhand der beigefügten Figuren beschrieben. Hierin zeigen
- Figur 1: ein Zugfahrzeug-Anhänger-Gespann und
- Figur 2: ein Ablaufdiagramm des erfindungsgemäßen Verfahrens zur Ansteuerung eines Bremssystems.

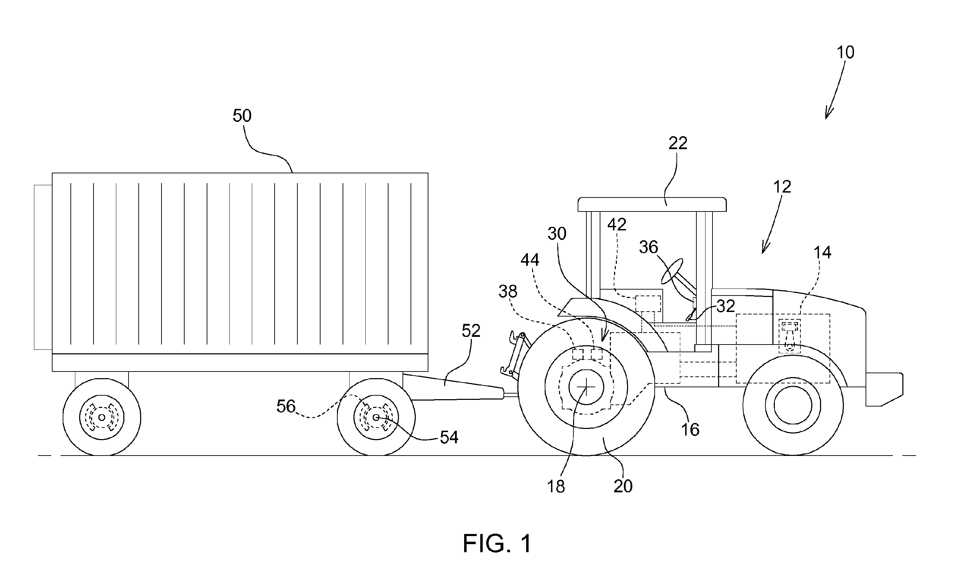

Die Figur 1 zeigt ein Zugfahrzeug 10 in Gestalt eines Traktors, der über eine kuppelbare Zugdeichsel 52 mit einem Anhänger 50 verbunden ist. Das Zugfahrzeug 10 umfasst einen Fahrantriebsstrang 12 bestehend aus einer Verbrennungskraftmaschine 14, einer Getriebevorrichtung 16 und einer Antriebsachse 18 mit Antriebsrädern 20. Ferner weist das Zugfahrzeug 10 eine erste Betriebsbremseinrichtung 30 auf, die ein in einer Kabine 22 im Zugriffsbereich einer sich dort aufhaltenden Bedienperson angeordnetes Betätigungselement 32 in Form eines Bremspedals und eine Bremseinheit 34 zum Aufbringen eines Bremsmoment auf die Antriebsachse 18 umfasst, die bei Betätigung das Bremsmoment auf die momentan befahrene Bodenoberfläche überträgt. Die Bremseinheit 34 kann beispielsweise als nasslaufende Lamellenbremse ausgeführt sein. Eine Betätigung der ersten Betriebsbremseinrichtung 30 kann in herkömmlicher Weise erfolgen, nämlich indem die Bedienperson das Bremspedal 32 betätigt und von einer Hydraulikpumpe des Traktors 10 bereitgestelltes Drucköl mit einem Bremsdruck der Bremseinheit 34 zur Verfügung steht. Die bei Betätigung der ersten Betriebsbremseinrichtung 30 eingenommene Stellung des Bremspedals 32 kann mit einem Positionssensor 36, der erzeugte Bremsdruck kann mit einem Drucksensor 38 und die erzeugte Bremsverzögerung des Traktors kann mit einem Beschleunigungssensor 40 erfasst werden. Ferner ist eine elektronische Kontrolleinheit 42 vorgesehen, die mit der Verbrennungskraftmaschine 14, der Getriebevorrichtung 16, der ersten Betriebsbremseinrichtung 30 und den Sensoren 36, 38, 40 in einer Datenaustausch- und Steuerungsverbindung steht.

Das erfindungsgemäße Verfahren wird im Folgenden anhand eines Anhängers mit einer Fahrachse beschrieben, die ein zweites Betriebsbremssystem umfasst. Gleichermaßen kann das erfindungsgemäße Verfahren an einer elektrisch angetriebenen oder hydraulisch angetriebenen Triebachse durchgeführt werden. Auf eine Beschreibung der erfindungsgemäßen Durchführung an einer solchen Triebachse wird verzichtet.

Der Anhänger 50 umfasst zumindest eine Fahrachse 54 und kann wie vorliegend beispielhaft beschrieben als Ladewagen ausgeführt sein. Hierbei kann der Ladewagen in einer ersten Ausführungsform mit einer zweiten Betriebsbremseinrichtung 56 ausgestattet sein. Die zweite Betriebsbremseinrichtung 56 kann als pneumatisch betätigbare Anlage ausgeführt sein. Die zweite Betriebsbremseinrichtung 56 ist überwiegend im Bereich der Fahrachse 54 angeordnet und kann in bekannter Weise aufgebaut sein. Insbesondere können Bremszylinder vorgesehen sein, in denen pneumatisch ein Bremsdruck erzeugt werden kann, so dass in den Bremszylindern einsitzende Bremskolben Reibbeläge gegen eine Reibfläche in einer Bremstrommel oder auf einer Bremsscheibe beaufschlagen. In der Folge überträgt die Fahrachse 54 ein Bremsmoment auf die momentan befahrene Bodenoberfläche, so dass eine Verzögerung auf den Anhänger 50 wirkt.

Zur Ansteuerung der Betriebsbremseinrichtung 56 des Anhängers 50 ist ein über die elektronische Kontrolleinheit 42 elektrisch ansteuerbares Anhängerbremsventil 44 auf dem Traktor 10 vorgesehen. Durch das elektrisch ansteuerbare Anhängerbremsventil 44 ist die Möglichkeit gegeben, die Betriebsbremseinrichtung 56 des Anhängers 50 unabhängig von einer Betriebsbremseinrichtung des Traktors 10 anzusteuern und den Bremsdruck in der Betriebsbremseinrichtung 56 des Anhängers 50 dynamisch anzupassen.

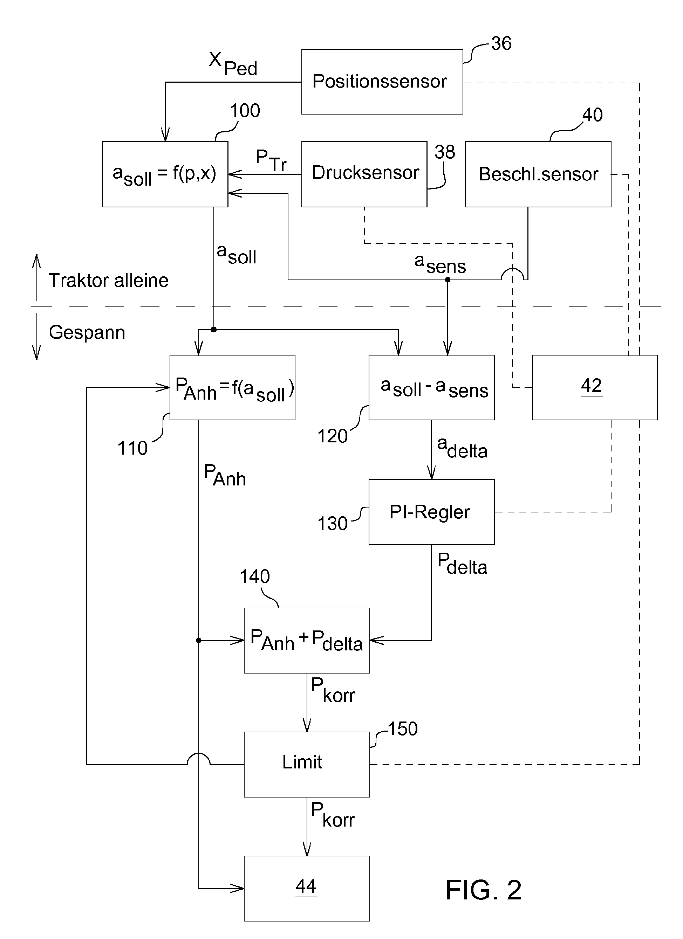

Das erfindungsgemäße Verfahren zur Ansteuerung eines Bremssystems in einem Zugfahrzeug-Anhänger-Gespann ist in seinem Ablauf in der Figur 2 gezeigt. In dem oberen Bereich der Figur 2 ist oberhalb der gestrichelten Linie der Verfahrensschritt 100 dargestellt, der lediglich für den Traktor alleine ohne Anhänger durchgeführt wird. Der Verfahrensschritt 100 erhält von den Sensoren 36, 38, 40 verschiedene Eingangswerte und zwar von dem Positionssensor 36 den vorliegenden Pedalweg x_{Ped} des betätigten Bremspedals 32, von dem Drucksensor 38 den vorliegenden Bremsdruck p_{Tr} im ersten Betriebsbremssystem 34 des Traktors 10 und von dem Beschleunigungssensor 40 die Bremsverzögerung aₛₑₙₛ des Traktors 10 bei einer Bremsung. Aus den Eingangsdaten x_{Ped}, p_{Tr}, aₛₑₙₛ bildet der Verfahrensschritt 100 den funktionalen Zusammenhang aₛₒₗₗ = f(x_{Ped}, p_{Tr}) und hinterlegt diesen in einer Kennlinie, die im Kontext dieser Anmeldung als zweite Kennlinie bezeichnet wird. Solange der Traktor 10 nicht mit einem Anhänger 50 gekoppelt ist, wird der Verfahrensschritt 100 zyklisch durchgeführt.

Sobald der Traktor 10 mit einem Anhänger 10 gekoppelt ist, wird die in der zweiten Kennlinie hinterlegte Bremsverzögerung aₛₒₗₗ und die mit dem Beschleunigungssensor 40 kontinuierlich gemessene Bremsverzögerung aₛₑₙₛ an die Verfahrensschritte 110 und 120 und die kontinuierlich gemessene Bremsverzögerung aₛₑₙₛ lediglich an den Verfahrensschritt 120 übergeben. Der Verfahrensschritt 110 bestimmt anhand einer hinterlegten ersten Kennlinie p_{Anh} = f(aₛₒₗₗ) aus der Bremsverzögerung aₛₒₗₗ einen anzusteuernden Bremsdruck p_{Anh}, mit dem die zweite Betriebsbremseinrichtung 56 des Anhängers über das Anhängerbremsventil 44 angesteuert wird. Der Verfahrensschritt 120 bildet aus der Bremsverzögerung aₛₒₗₗ und der kontinuierlich gemessenen Bremsverzögerung aₛₑₙₛ einen Beschleunigungsdifferenzwert a_{delta} und führt diesen Wert in Verfahrensschritt 130 einem Proportional-Integral-Regler zu. Der Proportional-Integral-Regler berechnet in Verfahrensschritt 130 einen Bremsdruckdifferenzwert p_{delta}.

Der Verfahrensschritt 140 summiert den in Verfahrensschritt 110 bestimmten Bremsdruck p_{Anh} und den in dem Verfahrensschritt 130 von dem Proportional-Integral-Regler berechneten Bremsdruckdifferenzwert p_{delta} zu einem korrigierten Bremsdruck pₖₒᵣᵣ auf. Dieser Bremsdruck pₖₒᵣᵣ wird in dem Verfahrensschritt 150 einer Grenz- und Plausibilitätsbewertung unterzogen, ob einzuhaltende Grenzen des Bremsdrucks über- oder unterschritten werden. Ist diese Bewertung mit dem Ergebnis erfolgt, dass der korrigierte Bremsdruck pₖₒᵣᵣ die gesetzten Grenzen einhält und einen plausiblen Werte angenommen hat, wird die zweite Betriebsbremseinrichtung 56 über das Anhängerbremsventil 44 mit dem der Bremsdruck pₖₒᵣᵣ angesteuert. Gleichzeitig wird der korrigierte Bremsdruck pₖₒᵣᵣ auf den Verfahrensschritt 110 rückgeführt, so dass einerseits die zweite Betriebsbremseinrichtung 56 nicht weiterhin mit den Bremsdruck p_{Anh} angesteuert wird und andererseits der korrigierte Bremsdruck pₖₒᵣᵣ als Eingangswert für eine Verschiebung des Bremsdruck p_{Anh} in der ersten Kennlinie p_{Anh} = f(aₛₒₗₗ) hinterlegt wird.

### Bezugszeichenliste

- 10: Zugfahrzeug
- 12: Fahrantriebsstrang
- 14: Verbrennungskraftmaschine
- 16: Getriebevorrichtung
- 18: Antriebsachse
- 20: Antriebsrad
- 22: Kabine
- 30: Betriebsbremseinrichtung
- 32: Betätigungselement
- 34: Bremseinheit
- 36: Positionssensor
- 38: Drucksensor
- 40: Beschleunigungssensor
- 42: Elektronische Kontrolleinheit
- 44: Anhängerbremsventil
- 50: Anhänger
- 52: Zugdeichsel
- 54: Fahrachse
- 56: Betriebsbremseinrichtung

## Patentansprüche

1. Verfahren zur Ansteuerung eines Bremssystems in einem Zugfahrzeug-Anhänger-Gespann,
wobei das Zugfahrzeug (10) eine Betriebsbremseinrichtung (30) und der Anhänger (50) zumindest eine Fahrachse (54) umfasst, über die durch Ansteuerung über das Zugfahrzeug ein Bremsmoment auf eine befahrene Bodenoberfläche übertragen werden kann,
wobei ein Sollwert (aₛₒₗₗ) einer eine Bremsverzögerung charakterisierende Verzögerungsgröße des Zugfahrzeugs (10) ohne Anhänger (50) bei Betätigung der ersten Betriebsbremseinrichtung (30) als Vorgabegröße erfasst und hinterlegt wird und
ein Istwert (aᵢₛₜ) der Verzögerungsgröße des Zugfahrzeugs (10) mit Anhänger (50) bei Betätigung der ersten Betriebsbremseinrichtung (30) und Ansteuerung der Fahrachse (54) erfasst wird und durch Anpassen der Betätigung der Fahrachse (54) dem Sollwert (aₛₒₗₗ) angeglichen wird.

2. Verfahren zur Ansteuerung eines Bremssystems nach Anspruch 1, **dadurch gekennzeichnet, dass** in Abhängigkeit des Sollwertes (aₛₒₗₗ) der Verzögerungsgröße eine ein Bremsmoment repräsentierende Ansteuergröße (M_{Anh}, p_{Anh}) der Fahrachse (54) anhand einer hinterlegten ersten Kennlinie ermittelt und angesteuert wird.

3. Verfahren zur Ansteuerung eines Bremssystems nach Anspruch 2, **dadurch gekennzeichnet, dass** die Fahrachse (54) mit einer korrigierten Ansteuergröße (Mₖₒᵣᵣ, pₖₒᵣᵣ) angesteuert wird, wobei ein Proportional-Integral-Regler die korrigierte Ansteuergröße (Mₖₒᵣᵣ, pₖₒᵣᵣ) aus einem Beschleunigungsdifferenzwert (a_{del}-ta) zwischen dem Istwert (aᵢₛₜ) und dem Sollwert (aₛₒₗₗ) der Verzögerungsgröße berechnet.

4. Verfahren zur Ansteuerung eines Bremssystems nach Anspruch 3, **dadurch gekennzeichnet, dass** die erste Kennlinie in Richtung einer höheren oder niedrigeren Ansteuergröße (M_{Anh}, p_{Anh}) der Fahrachse (54) angepasst wird, wenn eine korrigierte Ansteuergröße (Mₖₒᵣᵣ, pₖₒᵣᵣ) von der in der ersten Kennlinie hinterlegten Ansteuergröße (M_{Anh}, p_{Anh}) abweicht.

5. Verfahren zur Ansteuerung eines Bremssystems nach einem der Ansprüche 1 bis 4, **dadurch gekennzeichnet, dass** der Sollwert (aₛₒₗₗ) der Verzögerungsgröße in Abhängigkeit des Bremsdrucks (p_{Tr}) und einer Betätigungsstellung der ersten Betriebsbremseinrichtung (30) in einer zweiten Kennlinie hinterlegt ist.

6. Verfahren zur Ansteuerung eines Bremssystems nach Anspruch 5, **dadurch gekennzeichnet, dass** die zweite Kennlinie in Richtung eines höheren oder niedrigeren Sollwerts (aₛₒₗₗ) der Verzögerungsgröße angepasst wird, wenn ein sensorisch erfasster Wert (aₛₑₙₛ) der Verzögerungsgröße des Zugfahrzeugs (10) ohne Anhänger (50) von dem in der zweiten Kennlinie hinterlegten Sollwerts (aₛₒₗₗ) der Verzögerungsgröße abweicht.

7. Verfahren zur Ansteuerung eines Bremssystems nach einem der Ansprüche 1 bis 6, **dadurch gekennzeichnet, dass** die Werte (aₛₒₗₗ, aᵢₛₜ, aₛₑₙₛ) der Verzögerungsgröße über einen Beschleunigungssensor (40) erfasst werden.

8. Verfahren zur Ansteuerung eines Bremssystems nach einem der Ansprüche 1 bis 7, **dadurch gekennzeichnet, dass** die Fahrachse (54) des Anhängers (50) eine über das Zugfahrzeug (10) ansteuerbare zweite Betriebsbremseinrichtung (56) umfasst, um ein Bremsmoment auf eine befahrene Bodenoberfläche zu übertragen.

9. Verfahren zur Ansteuerung eines Bremssystems nach Anspruch 8, **dadurch gekennzeichnet, dass** die zweite Betriebsbremseinrichtung (56) pneumatisch oder hydraulisch betätigt ist.

10. Verfahren zur Ansteuerung eines Bremssystems nach einem der Ansprüche 1 bis 7, **dadurch gekennzeichnet, dass** es sich bei der Fahrachse (44) des Anhängers (40) um eine elektrisch angetriebene oder eine hydraulisch angetriebene Triebachse handelt.
